(19) **Europäisches Patentamt / European Patent Office / Office européen des brevets**

(11) **EP 2 507 113 B1**

(12) **FASCICULE DE BREVET EUROPEEN**

(45) Date de publication et mention de la délivrance du brevet:
**14.08.2013 Bulletin 2013/33**

(21) Numéro de dépôt: **10801605.6**

(22) Date de dépôt: **29.11.2010**

(51) Int Cl.:
***B62D 15/02*** *(2006.01)*

(86) Numéro de dépôt international:
**PCT/FR2010/052554**

(87) Numéro de publication internationale:
**WO 2011/067523 (09.06.2011 Gazette 2011/23)**

(54) **DISPOSITIF DE DÉTERMINATION DE LA POSITION ANGULAIRE ABSOLUE DU VOLANT DE CONDUITE D'UNE DIRECTION ASSISTÉE ÉLECTRIQUE DE VÉHICULE AUTOMOBILE À L'AIDE DE PARAMÈTRES DYNAMIQUES PONDÉRÉS DU VÉHICULE.**

VORRICHTUNG ZUR BESTIMMUNG DER ABSOLUTEN WINKELPOSITION DES LENKRADES EINER ELEKTRISCHEN SERVOLENKSÄULE EINES KRAFTFAHRZEUGES MIT GEWICHTETEN DYNAMISCHEN PARAMETERN DES FAHRZEUGES

DEVICE FOR DETERMINING THE ABSOLUTE ANGULAR POSITION OF THE STEERING WHEEL OF AN ELECTRIC POWER-ASSISTED STEERING COLUMN OF A MOTOR VEHICLE USING WEIGHTED DYNAMIC PARAMETERS OF THE VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2009 FR 0958476**

(43) Date de publication de la demande:
**10.10.2012 Bulletin 2012/41**

(73) Titulaire: **JTEKT Europe**
**69540 Irigny (FR)**

(72) Inventeurs:
• **MICHELIS, André**
  **F-69540 Grigny (FR)**
• **BARTHOMEUF, Julien**
  **F-69230 Saint Genis Laval (FR)**
• **PILAZ, Pierre**
  **F-69170 Saint Marcel L'eclaire (FR)**
• **BOURBON, Stéphane**
  **F-69360 Saint Symphorien d'Ozon (FR)**

(74) Mandataire: **Verriest, Philippe et al**
**Cabinet Germain & Maureau**
**B.P.6153**
**69466 Lyon Cedex 06 (FR)**

(56) Documents cités:
**DE-A1-102005 053 902    DE-A1-102007 021 625
US-A1- 2006 293 818**

**Description**

La présente invention concerne un procédé de détermination de la position absolue du volant de conduite pour des véhicules automobiles équipés d'une direction assistée électrique (DAE) et comportant au moins un moyen de mesure d'un paramètre dynamique sur le roulage du véhicule.

L'information de position angulaire absolue du volant est de plus en plus nécessaire dans la conduite d'un véhicule, pour :

- la fonction de retour automatique de la direction au point milieu,
- les algorithmes de régulation de la fonction d'assistance,
- l'équipement de contrôle de trajectoire (ESP),
- les indicateurs de changement de direction,
- les feux additionnels de virage, ou feux directionnels,
- les dispositifs intelligents d'assistance au parking (IPA, PLA).

Ces diverses applications entraînent plusieurs problématiques sous-jacentes :

- l'information de position angulaire du volant doit être disponible dès le démarrage du véhicule,
- cette information doit être absolue et multi-tour,
- la précision de cette information doit être important,
- l'exactitude de cette information doit être constamment vérifiée,
- le volant doit pouvoir être tourné d'un angle important même lorsque le contact est coupé.

Pour résoudre ces diverses problématiques, il est connu d'employer un capteur de position angulaire absolue dédié situé entre le volant et le pignon de la direction. Cette solution entraîne un surcoût important sur le prix de la direction.

Le document FR2876972 propose une solution ne nécessitant pas de capteur de position angulaire absolu dédié en se basant sur :

- la position angulaire du rotor du moteur d'assistance de la direction assistée électrique, nécessaire au contrôle de celui-ci,
- le rapport de réduction entre le moteur d'assistance et la colonne de direction permettant de définir une position relative du volant,
- la définition d'un segment de référence dans le positionnement du moteur d'assistance obtenu par la comparaison d'une estimation statistique sur la similitude de la vitesse des roues arrière en ligne droite avec une estimation mécanique obtenue par le calcul de l'angle de braquage du véhicule,
- la définition d'une marge d'erreur dans la définition du segment de référence,
- la définition d'une valeur de décalage et déduction d'une position angulaire absolue du volant en ajustant le zéro de la position relative du volant sur la position de référence.

Cependant, ce procédé nécessite des conditions de roulage précises du véhicule pour être mis en oeuvre, notamment une mesure égale de la vitesse des roues arrière qui ne peut être effectuée que lorsque le véhicule roule en ligne droite. La détermination de la position absolue du volant par ce procédé n'est donc pas possible si le véhicule au démarrage est déjà engagé dans un virage.

Le document DE 10 2007 021 625 A1 décrit également une solution d'initialisation de l'angle de braquage du conducteur sur un véhicule automobile à quatre roues.

Ce procédé s'affranchit d'une part d'une façon connue, notamment du document FR2876972, d'un capteur dédié d'angle de position du volant en utilisant l'angle de position du rotor du moteur électrique de direction assistée et utilise d'autre part des mesures de paramètres dynamique du véhicule, tels que la mesure d'un taux de lacet et d'une vitesse de déplacement du véhicule, pour déterminer un écart entre un angle de braquage relatif du conducteur et un angle de braquage réel dit absolu du conducteur

Un tel calcul de l'angle de position du rotor du moteur électrique est uniquement basé sur une estimation statistique du nombre d'occurrences réalisées sur un secteur du moteur d'assistance.

Cependant, ce procédé n'est mis en oeuvre qu'en sortie d'usine ou suite à la déconnexion de la batterie du véhicule et non à chaque démarrage du véhicule.

Un tel procédé ne prend donc pas en compte les éventuels risques d'erreur dans le calcul de l'angle de braquage absolu du conducteur pouvant survenir au cours d'une utilisation du véhicule, et place toutes les mesures de paramètres dynamiques du véhicule sur un même niveau de fiabilité quelle que soit sa provenance.

La présente invention a pour but de résoudre tout ou partie des inconvénients mentionnés ci-dessus notamment en fournissant un procédé dont l'initialisation ne soit pas restreinte à des conditions particulières de roulage du véhicule et dont la mise en oeuvre considère les risques d'erreurs liés aux mesures des paramètres dynamiques.

A cet effet, la présente invention a pour objet un procédé pour la détermination de la position angulaire absolue d'un volant de conduite d'une direction assistée électrique de véhicule automobile comportant au moins un moyen de mesure d'un paramètre dynamique lors du roulage du véhicule, la direction assistée électrique comprenant :

- un moteur électrique d'assistance piloté par un calculateur électronique et comportant un rotor effectuant un nombre de tours ($N_{tours\text{-}elec}$) pendant la rotation du volant,
- un réducteur en sortie du moteur électrique de rapport de réduction ($\Gamma$),
- un capteur angulaire de la position du rotor du moteur, du type « resolver » et mesurant une position absolue mono-tour ($\theta_{mono-élec}$) dépendant d'un nombre de paires de pôles (n) réparties entre le capteur angulaire et le rotor du moteur, et
- un capteur de couple permettant de connaître le couple exercé sur le volant par le conducteur,

ledit procédé étant caractérisé en ce qu'il comporte les étapes :

- d'initialisation à 0 du nombre de tours ($N_{tours\text{-}elec}$) du rotor du moteur électrique au démarrage du véhicule,
- de détermination périodique d'une position angulaire relative multi-tour-du volant, en particulier par la formule :

$$\theta_{relatif\ volant} = \frac{\dot{\theta}_{mono-elec}\ \times\ N_{tours-elec}}{\Gamma\ \times\ n}$$

- de détermination d'au moins un paramètre dynamique relatif aux conditions de roulage du véhicule à partir de l'au moins un moyen de mesure de ce paramètre,
- de détermination des données internes de la direction assistée électrique tels que la vitesse du moteur et le couple de braquage qui est égal à la somme du couple d'assistance du moteur et du couple exercé par le conducteur,
- de détermination d'un angle de volant absolu calculé à partir d'au moins un paramètre dynamique sur les conditions dynamiques de roulage du véhicule,
- de contrôle de la validité de la valeur calculée de l'angle volant absolu en fonction des conditions dynamiques de roulage du véhicule dans lesquelles il a été déterminé ainsi que des données internes de la direction assistée électrique,
- de pondération de la valeur calculée de l'angle de volant absolu en fonction du contrôle de validité de la valeur calculée de l'angle de volant absolu, et de la provenance de cette valeur, c'est-à-dire du moyen de mesure utilisé pour déterminer l'au moins un paramètre dynamique,
- de détermination d'une valeur d'autorisation de recalage de la position absolue du volant, et
- de recalage de la position du volant sur la valeur d'autorisation de recalage.

Ce procédé est satisfaisant en ce qu'il est initié à chaque démarrage du véhicule, et qu'il n'est pas nécessaire de placer le véhicule dans des conditions dynamiques de roulage particulière, notamment de stabilité, cette détermination étant basée non plus sur une estimation statistique du nombre d'occurrences réalisées sur un secteur du moteur d'assistance mais sur une pondération de la valeur de cet angle en fonction de la provenance des valeurs calculées à partir des conditions dynamiques de roulage. L'analyse des données relatives aux conditions dynamiques de roulage véhicule et du couple de braquage (couple d'assistance + couple conducteur) permet de déterminer une position angulaire absolue multi-tour du volant en permanence et ceci dès le démarrage du véhicule. De plus, la précision du recalage est d'autant meilleure que le « resolver » fournit une position fiable et précise de la position relative du volant, ce qui est le cas puisque l'arbre du moteur et la colonne de direction sont liés mécaniquement par le réducteur de la DAE dont le rapport de réduction peut être vu comme un multiplicateur de précision de la course du volant.

Selon le même mode opératoire, l'étape de recalage de la position du volant a lieu si des conditions dynamiques prédéterminées du véhicule sont réunies.

Cette disposition permet d'obtenir une valeur fiable de la position angulaire absolue du volant dans la mesure où certaines conditions dynamiques de roulage empêchent d'avoir une précision satisfaisante de cette position angulaire absolue.

Dans le cas du mode opératoire précédent, les conditions dynamiques prédéterminées concernent un seuil de vitesse de véhicule donné.

La vitesse du véhicule influe directement sur certains paramètres dynamiques de roulage comme la vitesse des roues et la vitesse de lacet dans un virage qui sont données par deux moyens de mesure de données dynamiques du véhicule, ce qui apporte en plus une redondance de l'information pouvant entrer en compte dans la pondération de la valeur calculée de l'angle de volant absolu.

Dans le cas du mode opératoire précédent, le recalage a lieu si les conditions dynamiques prédéterminées du véhicule sont respectées pendant une durée prédéterminée.

Cette disposition a pour effet d'améliorer la précision et la validité de la valeur calculée de l'angle de volant absolu.

Selon un mode opératoire, le procédé comprend une étape de correction dans la détermination d'au moins un paramètre dynamique du véhicule en cas de roue de diamètre différent des autres ou de pneu dégonflé.

Cette disposition prévoit le cas où des valeurs renvoyées par les moyens de mesure seraient faussées à cause d'un pneu dégonflé ou du roulage avec une roue de secours de diamètre différent que les autres roues et prévoit un ajustement, si besoin, par des coefficients correcteurs de vitesse de roues.

Selon un mode opératoire, le moyen de mesure d'un paramètre dynamique du véhicule comprend un système antiblocage de roues (ABS) permettant de déterminer la vitesse des roues à l'aide de capteurs disposés sur chacune des roues.

Cette disposition permet de profiter d'un équipement préexistant sur le véhicule pour déterminer la vitesse des roues et ainsi calculer l'angle absolu du volant tout en s'affranchissant d'un capteur dédié à la mesure de ces vitesses de roues.

Dans le cas du mode opératoire précédent, les capteurs disposés sur chacune des roues envoient des signaux à un calculateur d'ABS qui traite ces signaux afin d'en déduire la vitesse de chacune des roues, puis qui les met périodiquement à disposition sur un réseau CAN (Controller Area Network) du véhicule.

Cette disposition permet à l'ensemble des calculateurs du véhicule d'avoir accès à l'information sur la vitesse des roues du véhicule.

Selon un mode opératoire, le moyen de mesure d'un paramètre dynamique du véhicule comprend un équipement de contrôle de trajectoire (ESP) permettant de déterminer la vitesse de lacet et/ou l'accélération latérale du véhicule.

Cette disposition permet de calculer un angle absolu du volant à partir des paramètres dynamiques de vitesse de lacet et/ou d'accélération latérale du véhicule.

Selon le même mode opératoire, un calculateur d'ESP met périodiquement à disposition sur un réseau CAN (Controller Area Network) du véhicule les valeurs de la vitesse de lacet et/ou de l'accélération latérale du véhicule.

Cette disposition permet à l'ensemble des calculateurs du véhicule d'avoir accès à l'information sur la vitesse de lacet et l'accélération latérale du véhicule.

Selon un mode opératoire, le calculateur électronique de la direction assistée électrique reçoit des informations sur la vitesse des roues et/ou sur la vitesse de lacet et/ou sur l'accélération latérale du véhicule sur un réseau CAN du véhicule.

Cette disposition permet au calculateur électronique embarqué de la direction assistée électrique de récupérer des données sur le comportement dynamique du véhicule, par exemple fournies par le calculateur d'ABS et/ou par le calculateur ESP.

De toute façon, l'invention sera bien comprise à l'aide de la description qui suit, en référence au dessin schématique annexé représentant, à titre d'exemples pour certains, une forme de mise en oeuvre du procédé selon l'invention.

La figure 1 est une vue en perspective, schématisée, d'une direction assistée électrique de l'état de la technique.

La figure 2 est une vue en perspective, schématisée, illustrant la mise en oeuvre du procédé de l'invention dans un véhicule.

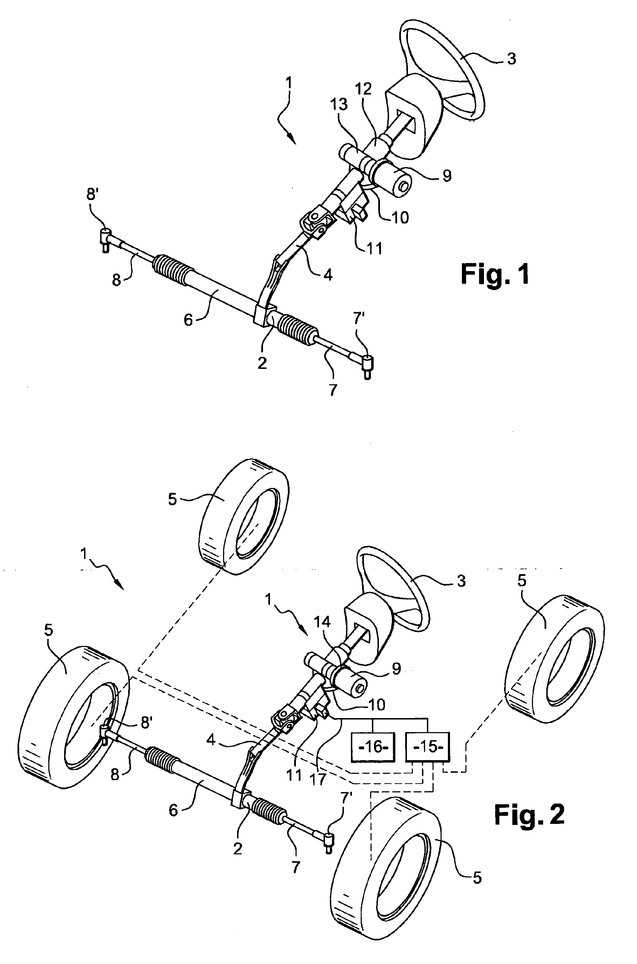

La figure 1 rappelle quels sont les principaux éléments composant un système de direction assistée électrique 1 de véhicule automobile.

Une telle direction 1 comprend, d'une part, une partie mécanique désignée globalement par le repère 2, comprenant un volant de conduite 3 lié à une colonne de direction 4, dont l'extrémité éloignée du volant 3 porte un pignon de direction en prise avec une crémaillère (non visible), montée coulissante dans un carter de direction 6. Les deux extrémités opposées de la crémaillère sont respectivement liées, par l'intermédiaire de biellettes gauche 7 et droite 8 équipées respectivement à leur extrémité extérieure d'une rotule de direction gauche 7' et droite 8', aux porte-moyeux (non représentés) des roues directrices gauche et droite du véhicule automobile concerné.

La direction assistée électrique 1 comprend, pour assister l'effort manuel exercé par le conducteur du véhicule sur le volant 3, un moteur électrique d'assistance 9 à double sens de rotation, dont l'arbre de sortie est accouplé, par l'intermédiaire d'un réducteur 10 notamment à vis sans fin et roue tangente, à la colonne de direction 4, de manière à transmettre un couple moteur (éventuellement aussi un couple résistant) à la colonne de direction 4.

Le moteur électrique d'assistance 9 est piloté par un calculateur électronique embarqué 11 relié à un réseau CAN 17 (Controller Area Network) du véhicule lui permettant de recevoir et de traiter divers signaux en provenance de divers capteurs contrôlant divers paramètres de comportement du véhicule.

Dans une réalisation selon l'état de la technique, le calculateur électronique 11 reçoit un signal électrique issu d'un capteur dédié 12 l'informant sur l'angle relatif, absolu ou absolu multi-tour de braquage du volant 3, représentatif de l'angle instantané réel de braquage du véhicule automobile concerné.

Ce calculateur 11 reçoit également un signal provenant d'un capteur de couple 13 placé sur la colonne de direction 4, et mesurant ainsi le couple exercé par le conducteur sur le volant 3.

A partir de ces diverses informations, le calculateur 11 pilote le moteur électrique d'assistance 9, en imposant à tout moment des données internes de la direction assistée électrique 1 tels qu'un couple ou un effort d'assistance du moteur 9, pouvant amplifier ou au contraire compenser l'effort appliqué par le conducteur sur le volant 3, selon des « lois d'assistance » prédéfinies et programmées dans une mémoire non volatile du calculateur 11.

Dans une direction assistée électrique utilisée avec le procédé selon l'invention, le capteur dédié 12 est supprimé et on utilise l'information d'un capteur angulaire 14 de la direction assistée électrique 1 de type « resolver » dédié à la détection de la position angulaire absolue $\theta$ du moteur électrique d'assistance 9 entre deux pôles successifs parmi n pôles statoriques de ce moteur d'assistance 9, avec

$$0 < \theta < \frac{360}{n}$$

En comptant le nombre de tours du rotor du moteur 9, par détection de passage par 0° à chaque échantillonage, il est possible de calculer une position relative multi-tour du rotor du moteur 9 par la formule :

$$\theta_{multi\ elec} = \theta_{mono\ elec} \times N_{tours\ elec}$$

avec la variable $N_{tours\_elec}$ qui est incrémentée à chaque passage de 359° à 0°, ou décrémentée à chaque passage de 0° à 359°.

La position relative multi-tours du rotor du moteur 9 s'obtient par les formules suivantes :

$$\theta_{multi\_rotor} = \frac{\theta_{multi\_elec}}{n}$$

$$\theta_{multi\_rotor} = \frac{\theta_{mono\_elec} \times N_{tours\_elec}}{n}$$

La colonne de direction 4 est entraînée en rotation par le moteur 9, via le réducteur 10, la position du volant 3 par rapport au moteur 9 est donnée par la formule suivante :

$$\theta_{relatif\_volant} = \frac{\theta_{multi\_rotor}}{\Gamma}$$

La position relative multi-tour du volant 3 en fonction de la position absolue mono-tour du moteur 9, est finalement déterminée à partir de la formule suivante :

$$\theta_{relatif\_volant} = \frac{\theta_{mono\_elec} \times N_{tours\_elec}}{\Gamma \times n}$$

Au démarrage du véhicule, le nombre de tours $N_{tours-elec}$ est initialisé à 0. La position relative prend comme valeur initiale 0°, et ne pourra jamais être supérieure à la course maximale du volant 3 de butée à butée.

La position angulaire du volant 3 déterminée à partir de la position angulaire du moteur d'assistance 9 permet d'obtenir une position relative d'une précision et d'une résolution importante

Ce processus peut s'appliquer quel que soit le système d'assistance électrique sur colonne, sur pignon, ou sur crémaillère. Dans la mesure où le volant est relié mécaniquement au système, il est toujours possible de déterminer sa position, en tenant compte des éléments mécaniques intermédiaires (réducteurs, barres de torsion).

Ce processus peut s'appliquer également sur des systèmes de direction dans lesquels la fonction reliant la position du volant, et la position du pignon n'est pas linéaire.

En effet, la position calculée sera le reflet de la position du pignon, or c'est cette position qui détermine le braquage des roues avant, et la direction du véhicule. C'est donc la position du pignon qui intéresse les équipements.

Selon l'invention, la mise en oeuvre du procédé pour la détermination de la position angulaire absolue du volant de conduite d'une direction assistée électrique de véhicule automobile, utilise au moins un moyen de mesure fournissant la valeur d'un paramètre dynamique du véhicule lors de son roulage.

Ce moyen de mesure comprend le calculateur 15 du système antiblocage de roues (ABS) permettant de déterminer la vitesse des roues 5 à l'aide de capteurs disposés sur chacune des roues 5 et/ou le calculateur 16 de l'équipement de contrôle trajectoire (ESP) permettant de déterminer la vitesse de lacet et/ou l'accélération latérale du véhicule.

Dans la détermination d'une position absolue du volant 3 par l'analyse des vitesses de roues 5 founie par le calculateur ABS 15, l'algorithme employé par le calculateur 11 utilise de façon générale les écarts de vitesse entre les roues 5 gauche et droite.

Cet algorithme est précisé ici à titre d'exemple en utilisant la vitesse des roues arrière, mais il serait également possible d'utiliser la vitesse des roues avant, ou les quatre roues 5.

La vitesse moyenne des roues arrière s'obtient par la formule suivante :

$$V_{moyenne\ roues\ arrière} = \frac{V_{roue\ gauche\ arrière} + V_{roue\ droite\ arrière}}{2}$$

L'écart de vitesse E des roues arrière s'écrit :

$$E_{vitesses\ arrière} = V_{roue\ gauche\ arrière} - V_{roue\ droite\ arrière}$$

Le signe instantané de la direction est donné par le signe de l'écart de vitesse des roues arrière, et par convention, ce signe est positif lorsque le volant est tourné à droite et ce signe est négatif lorsque le volant est tourné à gauche.

Connaissant la valeur constante de la voie arrière du véhicule, le rayon instantané R de la trajectoire du véhicule est calculé à partir de la formule suivante :

$$R = \frac{V_{moyenne\ roues\ arrière}}{E_{vitesses\ arrière}} \times Voie_{arrière}$$

Le rayon R étant déterminé, et connaissant l'empattement L du véhicule, l'angle d'Ackerman correspondant à l'angle moyen de braquage des roues directrices, est calculé à partir de la formule suivante :

$$\alpha_{Ackerman} = \frac{L}{R}$$

L'accélération latérale $\gamma_{latérale}$ du véhicule, estimée à partir du rayon instantané et de la vitesse moyenne du véhicule, permet de calculer l'angle moyen $\alpha$ de dérive des pneumatiques :

$$\gamma_{latérale} = \frac{(V_{moyenne\ roues\ arrière})^2}{R}$$

$$\alpha_{dérive} = K(R) \times \gamma_{latérale}$$

La relation entre le gradient K de sous-virage, et le rayon de braquage R, est propre à chaque type de véhicule. Cette relation est renseignée sous forme d'un abaque stocké en mémoire non volatile dans le calculateur 11.

L'angle de dérive moyen est corrigé par un gain correcteur G fonction de l'accélération latérale caractéristique au véhicule :

$$\alpha_{dérive} = G_{correcteur} \times \alpha_{dérive\_théorique}$$

L'angle moyen de braquage des roues directrices, est égal à la somme de l'angle d'Ackerman, et de l'angle moyen de dérive des pneumatiques :

$$\alpha_{roues\ directrices} = \alpha_{Ackerman} + \alpha_{dérive}$$

Il existe une relation entre la position angulaire absolue du volant, et l'angle de braquage des roues directrices, caractéristique de chaque type de véhicule. Cette relation est renseignée sous forme d'abaque stocké en mémoire non volatile dans le calculateur.

$$\theta_{absolu\ volant} = f\left(\alpha_{roues\ directrices}\right)$$

Cette même relation peut être obtenue à partir des informations fournies au calculateur 11 par le calculateur ESP 16 à partir de la vitesse de lacet ou de l'accélération latérale du véhicule.

A cet effet, le rayon instantané de la trajectoire d'un véhicule roulant à une vitesse V peut être calculé à partir de la vitesse de lacet *PSI'* du véhicule par la formule :

$$R = \frac{V_{Véhicule}}{PSI'}$$

et/ou à partir de l'accélération latérale $\gamma_{latérale}$ du véhicule par la formule :

$$R = \frac{(V_{Véhicule})^2}{\gamma_{latérale}}$$

Ces deux calculateurs 15, 16 mettent à disposition périodiquement les informations de vitesse des roues 5, de vitesse de lacet et d'accélération latérale sur le réseau CAN 17 du véhicule relié au calculateur 11 de la direction assistée électrique 1.

Pour la détermination de la position absolue du volant 3 à partir de la vitesse des roues 5, le procédé prévoit une correction des vitesses de roues 5 en cas de roulage avec une roue de secours de diamètre différent des autres roues 5 ou en cas de roulage avec un pneumatique dégonflé.

Cette fonction de correction contrôle les écarts de vitesse des roues 5 sur de longues distances, et ajuste, si besoin, les coefficients correcteurs de vitesse des roues 5.

Les variables utilisées par cette fonction sont sauvegardées en mémoire non volatile, afin de pouvoir calculer le cumul des écarts sur plusieurs kilomètres, indépendamment d'éventuels arrêts du véhicule durant le calcul.

Après avoir recueilli un paramètre dynamique de roulage, le calculateur 11 contrôle la validité de la valeur calculée de l'angle volant absolu en fonction d'une part des conditions dynamiques de roulage du véhicule dans lesquelles ce paramètre dynamique a été déterminé et en fonction d'autre part des données internes de la direction assistée électrique 1 tels que le couple d'assistance ou la vitesse du moteur.

A cet effet, le calculateur 11 pondère chacune de ces valeurs en fonction de règles prédéterminées établies sur les conditions dynamiques de roulage, comme par exemple un temps de roulage suffisant, un seuil de vitesse de véhicule donné mais aussi sur la provenance de ces valeurs selon qu'elles ont été déterminées par une mesure de la vitesse des roues 5 réalisée par le calculateur ABS 15 ou par une mesure de la vitesse de lacet et/ou de l'accélération latérale réalisée par le calculateur ESP 16.

Concernant cette provenance des valeurs calculées de l'angle volant absolu, on peut introduire une notion de score pouvant être interprétée comme un indice de confiance sur la précision du calcul théorique de l'angle absolu.

Le score est issu de la compilation de différentes tables de score ayant diverses entrées mélangeant les conditions dynamiques du véhicule et les données internes de la direction assistée électrique 1.

Le recoupement de l'ensemble des valeurs pondérées permet de calculer un décalage instantané de l'angle relatif correspondant à la différence entre l'angle relatif calculé à partir de la mesure du « resolver » 14 sur le rotor du moteur d'assistance 9 et les calculs d'angles absolus déterminés à partir des paramètres dynamiques de roulage provenant des calculateur ABS 15 et/ou calculateur ESP 16.

Afin de moyenner ces informations de décalage instantané, le calculateur 11 calcule la moyenne du décalage à l'aide d'une moyenne cumulée pondérée par le score instantané.

Le calcul et la mémorisation de l'écart entre la position relative, et la position absolue lorsque des conditions de roulage prédéterminées sont réunies, permet donc de déterminer précisémment à chaque instant la position absolue multi-tour du volant.

Le calculateur 11 de la direction assistée électrique 1 met à disposition périodiquement l'information de position absolue du volant sur le réseau CAN 17, ainsi que la validité de cette information.

Comme il va de soi, l'invention ne se limite pas au seul mode de mise en oeuvre décrit ci-dessus, à titre d'exemple ; elle embrasse, au contraire, toutes les variantes de mise en oeuvre de ce procédé. C'est ainsi, notamment, que l'on ne s'éloignerait pas du cadre de l'invention si l'ensemble des données recueillies, calculées et transmises par le calculateur 11 de la direction assistée électrique était recueillies, calculées et transmises par un autre calculateur dédié.

**Revendications**

1. Procédé pour la détermination de la position angulaire absolue d'un volant (3) de conduite d'une direction assistée électrique (1) de véhicule automobile comportant au moins un moyen de mesure d'un paramètre dynamique lors du roulage du véhicule, la direction assistée électrique (1) comprenant :

   - un moteur électrique d'assistance (9) piloté par un calculateur électronique (11) et comportant un rotor effectuant un nombre de tours ($N_{tours\text{-}elec}$) pendant la rotation du volant (3),
   - un réducteur (10) en sortie du moteur électrique (9) de rapport de réduction (r),
   - un capteur angulaire (14) de la position du rotor du moteur, du type « resolver » et mesurant une position absolue mono-tour ($\theta_{mono\_élec}$) dépendant d'un nombre de paires de pôles (n) réparties entre le capteur angulaire (14) et le rotor du moteur (9), et
   - un capteur de couple permettant de connaître le couple exercé sur le volant par le conducteur,

   ledit procédé comportant les étapes :

   - d'initialisation à 0 du nombre de tours ($N_{tours\_elec}$) du rotor du moteur électrique (9) au démarrage du véhicule,
   - de détermination périodique d'une position angulaire relative multi-tour du volant (3), en particulier par la formule :

$$\theta_{relatif\_volant} = \frac{\theta_{mono\_élec} \times N_{tours\_elec}}{r \times n}$$

   - de détermination d'au moins un paramètre dynamique relatifs aux conditions de roulage du véhicule à partir de l'au moins un moyen de mesure de ce paramètre,
   - de détermination des données internes de la direction assistée électrique (1) tels que la vitesse du moteur (9) et le couple de braquage qui est égal à la somme du couple d'assistance du moteur (9) et du couple exercé par le conducteur,
   - de détermination d'un angle de volant absolu calculé à partir d'au moins un paramètre dynamique sur les conditions dynamiques de roulage du véhicule, ledit procédé étant **caractérisé en ce qu'**il comporte les étapes suivantes :
   - de contrôle de la validité de la valeur calculée de l'angle de volant absolu en fonction des conditions dynamiques de roulage du véhicule dans lesquelles il a été déterminé ainsi que des données internes de la direction assistée électrique (1),
   - de pondération de la valeur calculée de l'angle de volant absolu en fonction du contrôle de validité de la valeur calculée de l'angle de volant absolu, et de la provenance de cette valeur, c'est-à-dire du moyen de mesure utilisé pour déterminer l'au moins un paramètre dynamique,
- de détermination d'une valeur d'autorisation de recalage de la position absolue du volant (3), et
- de recalage de la position du volant (3) sur la valeur d'autorisation de recalage.

2. Procédé selon la revendication 1 dans lequel l'étape de recalage de la position du volant (3) a lieu si des conditions dynamiques prédéterminées du véhicule sont réunies.

3. Procédé selon la revendication 2 dans lequel les conditions dynamiques prédéterminées concernent un seuil de vitesse de véhicule donné.

4. Procédé selon l'une des revendications 2 ou 3 dans lequel le recalage a lieu si les conditions dynamiques prédéterminées du véhicule sont respectées pendant une durée prédéterminée.

5. Procédé selon l'une des revendications précédentes comprenant une étape de correction dans la détermination d'au moins un paramètre dynamique du véhicule en cas de roue de diamètre différent des autres ou de pneu dégonflé.

6. Procédé selon l'une des revendications précédentes dans lequel le moyen de mesure d'un paramètre dynamique du véhicule comprend un système antiblocage de roues (ABS) permettant de déterminer la vitesse des roues (5) à l'aide de capteurs disposés sur chacune des roues (5).

7. Procédé selon la revendication 6 dans lequel les capteurs disposés sur chacune des roues (5) renvoient des signaux à un calculateur d'ABS (15) qui traite ces signaux afin d'en déduire la vitesse de chacune des roues (5), puis qui les met périodiquement à disposition sur un réseau CAN (17) du véhicule.

8. Procédé selon l'une des revendications précédentes dans lequel le moyen de mesure d'un paramètre dynamique du véhicule comprend un équipement de contrôle de trajectoire (ESP) permettant de déterminer la vitesse de lacet et/ou l'accélération latérale du véhicule.

9. Procédé selon la revendication 8 dans lequel un calculateur d'ESP (16) met périodiquement à disposition sur un réseau CAN (17) du véhicule les valeurs de la vitesse de lacet et/ou de l'accélération latérale du véhicule.

10. Procédé selon l'une des revendications précédentes dans lequel le calculateur électronique (11) de la direction assistée électrique reçoit des informations sur la vitesse des roues (5) et/ou sur la vitesse de lacet et/ou sur l'accélération latérale du véhicule sur un réseau CAN (17) du véhicule.

**Patentansprüche**

1. Verfahren zur Bestimmung der absoluten Winkelposition eines Lenkrads (3) einer elektrischen Servolenkung (1) eines Kraftfahrzeugs, das mindestens ein Messmittel eines dynamischen Parameters beim Fahren des Fahrzeugs aufweist, wobei die elektrische Servolenkung (1) umfasst:

   - einen von einem elektronischen Rechner (11) gesteuerten elektrischen Hilfsmotor (9), der einen Rotor aufweist, der während der Rotation des Lenkrads (3) eine Anzahl der Umdrehungen ($N_{tours\_elec}$) durchführt,
   - ein Getriebe (10) am Ausgang des elektrischen Motors (9) mit einem Untersetzungsverhältnis ($\Gamma$),
   - einen Winkelsensor (14) der Position des Rotors des Motors vom Typ "Resolver", der die absolute Mono-Umdrehungsposition ($\Theta_{mono\_élec}$) misst, die von einer Anzahl von Polpaaren (n) abhängt, die zwischen dem Winkelsensor (14) und dem Rotor des Motors (9) verteilt sind, und
   - einen Drehmomentsensor, der es erlaubt, das vom Kraftfahrer auf das Lenkrad ausgeübte Drehmoment zu ermitteln,

   wobei das Verfahren die Schritte aufweist:

   - Initialisierung auf 0 der Anzahl der Umdrehungen ($N_{tours\_elec}$) des Rotors des elektrischen Motors (9) beim Anlassen des Fahrzeugs,
   - periodische Bestimmung einer relativen Multi-Umdrehungsposition des Lenkrads (3), vor allem durch die Formel:

$$\theta_{relatif\_volant} = \frac{\theta_{mono\_elec} \times N_{tours\_elec}}{\Gamma \times n}$$

- Bestimmung mindestens eines dynamischen Parameters relativ zu den Fahrbedingungen des Fahrzeugs ausgehend von dem mindestens einem Messmittel dieses Parameters,
- Bestimmung der internen Daten der elektrischen Servolenkung (1) wie Motorgeschwindigkeit (9) und Einschlagmoment, was der Summe des Hilfsmoments des Motors (9) und des von dem Kraftfahrer ausgeübten Moments entspricht,
- Bestimmung eines absoluten Lenkradwinkels, der auf der Basis mindestens eines dynamischen Parameters für die dynamischen Fahrbedingungen des Fahrzeugs berechnet wird,

wobei das Verfahren **dadurch gekennzeichnet ist, dass** es die folgenden Schritte umfasst:

- Überprüfung der Gültigkeit des für den absoluten Lenkradwinkel berechneten Werts in Abhängigkeit von den dynamischen Fahrbedingungen des Fahrzeugs, unter denen er bestimmt wurde, sowie der internen Daten der elektrischen Servolenkung (1),
- Wichtung des für den absoluten Lenkradwinkel berechneten Werts in Abhängigkeit von der Überprüfung der Gültigkeit des für den absoluten Lenkradwinkel berechneten Werts, und der Herkunft dieses Werts, das heißt, des zur Bestimmung des mindestens einen dynamischen Parameters verwendeten Messmittels,
- Bestimmung eines Genehmigungswerts für die Neuabstimmung der absoluten Position des Lenkrads (3), und
- Neuabstimmung der Position des Lenkrads (3) gemäß dem genehmigten Wert für die Neuabstimmung.

2. Verfahren nach Anspruch 1, wobei der Schritt der Neuabstimmung der Position des Lenkrads (3) stattfindet, wenn die vorbestimmten dynamischen Bedingungen des Fahrzeugs erfüllt sind.

3. Verfahren nach Anspruch 2, wobei die vorbestimmten dynamischen Bedingungen einen bestimmten Grenzwert der Geschwindigkeit des Fahrzeugs betreffen.

4. Verfahren nach einem der Ansprüche 2 oder 3, wobei die Neuabstimmung stattfindet, wenn die vorbestimmten dynamischen Bedingungen des Fahrzeugs während einer vorbestimmten Dauer eingehalten werden.

5. Verfahren nach einem der vorangehenden Ansprüche, das einen Schritt der Korrektur bei der Bestimmung mindestens eines dynamischen Parameter des Fahrzeugs für den Fall eines Rads mit einem Durchmesser umfasst, der anders ist als der der anderen Räder, oder eines platten Reifens.

6. Verfahren nach einem der vorangehenden Ansprüche, wobei das Messmittel eines dynamischen Parameters des Fahrzeugs ein Antiblockiersystem der Räder (ABS) umfasst, das erlaubt, die Geschwindigkeit der Räder (5) mit Hilfe von Sensoren zu bestimmen, die an jedem der Räder (5) angeordnet sind.

7. Verfahren nach Anspruch 6, wobei die an jedem der Räder (5) angeordneten Sensoren Signale an einen ABS-Rechner (15) schicken, der diese Signale verarbeitet, um daraus die Geschwindigkeit jedes der Räder (5) abzuleiten, der sie dann periodisch einem CAN-Netz (17) des Fahrzeugs zur Verfügung stellt.

8. Verfahren nach einem der vorangehenden Ansprüche, wobei das Messmittel eines dynamischen Parameters des Fahrzeugs eine Ausrüstung zur Überprüfung der Bahn (ESP) umfasst, die erlaubt, die Schlinger- und/oder Seitenbeschleunigungs-Geschwindigkeit des Fahrzeugs zu bestimmen.

9. Verfahren nach Anspruch 8, wobei ein ESP-Rechner (16) über ein CAN-Netz (17) des Fahrzeugs die Werte der Schlinger- und/oder Seitenbeschleunigungs-Geschwindigkeit des Fahrzeugs periodisch zur Verfügung stellt.

10. Verfahren nach einem der vorangehenden Ansprüche, wobei der elektronische Rechner (11) der elektrischen Servolenkung über ein CAN-Netz (17) des Fahrzeugs Informationen über die Geschwindigkeit der Räder (5) und/oder über die Schlinger- und/oder Seitenbeschleunigungs-Geschwindigkeit erhält.

**Claims**

1. A method for determining the absolute angular position of a steering wheel (3) of an electric power-assisted steering column (1) of a motor vehicle using at least one means for measuring a dynamic parameter while the vehicle is running, the electric power-assisted steering column (1) comprising:

   - an electric power-assistance motor (9) controlled by an electronic computer (11) and including a rotor performing a number of revolutions ($N_{tours\_elec}$) during the rotation of the steering wheel (3),
   - a gear reducer (10) at the output of the electric motor (9) with a reduction ratio ($\Gamma$),
   - a sensor (14) sensing the angular position of the rotor of the motor, of the resolver type and measuring a single-revolution absolute position ($\theta_{mono\text{-}élec}$) depending on a number of pairs of poles (n) distributed between the angular sensor (14) and the rotor of the motor (9), and
   - a torque sensor making it possible to know the torque exerted on the steering wheel by the driver,

   said method including the following steps:

   - initializing the number of revolutions ($N_{tours\_elec}$) of the rotor of the electric motor (9) at 0 when the vehicle is started up,
   - periodically determining a relative multi-revolution angular position of the steering wheel (3), in particular using the formula:

   $$\theta_{relatif\_volant} = \frac{\theta_{mono\_elec} \times N_{tours\_elec}}{\Gamma \times n}$$

   - determining at least one dynamic parameter relative to the running conditions of the vehicle from the at least one means for measuring that parameter,
   - determining internal data of the electric power-assisted steering column (1) such as the speed of the motor (9) and the steering torque, which is equal to the sum of the assistance torque of the motor (9) and the torque exerted by the driver,
   - determining an absolute steering wheel angle calculated from at least one dynamic parameter on the dynamic running conditions of the vehicle,

   said method being **characterized in that** it includes the following steps:

   - checking the validity of the calculated value of the absolute steering wheel angle as a function of the dynamic running conditions of the vehicle under which it was determined as well as internal data of the electric power-assisted steering column (1),
   - weighting the calculated value of the absolute steering wheel angle as a function of the validity check of the calculated value of the absolute steering wheel angle, and the origin of that value, i.e., of the measuring means used to determine the at least one dynamic parameter,
   - determining a value for authorizing recalibration of the absolute position of the steering wheel (3), and
   - recalibrating the position of the steering wheel (3) on the recalibration authorization value.

2. The method according to claim 1, wherein the step for recalibrating the position of the steering wheel (3) takes place if predetermined dynamic conditions of the vehicle are met.

3. The method according to claim 2, wherein the predetermined dynamic conditions relate to a given vehicle speed threshold.

4. The method according to one of claims 2 or 3, in which the recalibration occurs if the predetermined dynamic conditions of the vehicle are met for a predetermined length of time.

5. The method according to one of the preceding claims, comprising a step for correcting the determination of at least one dynamic parameter of the vehicle in case of a wheel with a different diameter from the others or a deflated tire.

6. The method according to one of the preceding claims, wherein the means for measuring a dynamic parameter of the vehicle comprises an antilock brake system (ABS) making it possible to determine the speed of the wheels (5) using sensors positioned on each of the wheels (5).

7. The method according to claim 6, wherein the sensors positioned on each of the wheels (5) send signals back to an ABS computer (15) that processes those signals so as to deduce therefrom the speed of each of the wheels (5), then periodically makes them available on an ADC network (17) of the vehicle.

8. The method according to one of the preceding claims, wherein the means for measuring a dynamic parameter of the vehicle comprises an electronic stability program (ESP) making it possible to determine the rate of yaw and/or the lateral acceleration of the vehicle.

9. The method according to claim 8, wherein an ESP computer (16) periodically provides, on an ADC network (17) of the vehicle, the values of the rate of yaw and/or the lateral acceleration of the vehicle.

10. The method according to one of the preceding claims, wherein the electronic computer (11) of the electric power-assisted steering column receives information on the speed of the wheels (5) and/or on the rate of yaw and/or on the lateral acceleration of the vehicle on an ADC network (17) of the vehicle.

**Fig. 1**

**Fig. 2**

## RÉFÉRENCES CITÉES DANS LA DESCRIPTION

**Documents brevets cités dans la description**

- FR 2876972

- DE 102007021625 A1